# EUROPEAN PATENT SPECIFICATION

(11) **EP 1 998 503 B1**
(45) Date of publication and mention of the grant of the patent: **22.02.2012**
(21) Application number: 06817964.7
(22) Date of filing: 07.12.2006
(51) Int. Cl.: H04L 12/42, H04J 14/02, H04Q 11/00

(54) **RESILIENT OPTICAL BURST RING FAILURE PROTECTING METHOD, APPARATUS AND FAILURE PROCESSING METHOD**
VERFAHREN ZUM SCHUTZ GEGEN AUSFÄLLE IN FEHLERTOLERANTEN OPTISCHEN RINGEN MIT BUST-SCHALTUNG, VORRICHTUNG UND AUSFALL-BEARBEITUNGSVERFAHREN
PROCÉDÉ DE DE PROTECTION CONTRE LES DÉFAILLANCES D'ANNEAUX OPTIQUES RÉSILIENTS EN MODE RAFALE ET PROCÉDÉ DE TRAITEMENT DE DÉFAILLANCES

(30) Priority: 24.03.2006 CN 200610071334
(43) Date of publication of application: 03.12.2008
(73) Proprietor: Shanghai Jiao Tong University, Shanghai 200030 (CN); Huawei Technologies Co., Ltd., Shenzhen, Guangdong Province 518129 (CN)
(72) Inventor: WU, Guiling, Shanghai 200030 (CN); CHEN, Jianping, Shanghai 200030 (CN); LI, Xinwan, Shanghai 200030 (CN); QIAN, Wenjun, Shanghai 200030 (CN); LIU, Yue, Shenzhen 518129, Guangdong (CN)
(74) Representative: Körber, Martin Hans
(86) International application number: PCT/CN2006/003326
(87) International publication number: WO 2007/109937

(56) References cited:
- EP-A- 1 126 649
- EP-A- 1 411 666
- WO-A-2005/062578
- WO-A-2006/030435
- CN-A- 1 412 977
- CN-A- 1 588 826
- CN-A- 1 595 909
- KR-A- 20050 065 503
- US-A1- 2002 118 414
- US-A1- 2003 067 919
- US-A1- 2003 206 521
- US-A1- 2004 057 375
- US-A1- 2004 234 263

## Description

### FIELD OF THE INVENTION

The present invention relates to the optical communication field, and in particular, to a method and an apparatus for failover of a Resilient Optical Burst Ring (ROBR) and a fault handling method.

### BACKGROUND

Optical Burst Switching (OBS) is an attractive optical network scheme oriented to Dense Wavelength Division Multiplexing (DWDM) of high-burst and high-rate IP services, and has become a hot topic of research in the optical network field in recent years. In the OBS, a portal edge node encapsulates user data into Burst Data Packet (BDP) and generates the corresponding Burst Control Packet (BCP). The BCP has a priority over the BDP in being transmitted in the dedicated control channel, and an all-optical channel is reserved for the corresponding BDP on the intermediate nodes. The BDP is transmitted in the preset all-optical channel directly after being delayed for a period on the edge node. Such a unidirectional reservation scheme without the need of confirmation reduces the delay waiting time required for setting up a channel, and improves the bandwidth utilization ratio; the BDP of a medium granularity reduces the overhead and improves the utilization ratio. Separation of BDP from BCP, proper granularity, and non-timeslot switching mode reduce the requirements on optical components and the complexity of intermediate switching nodes, and make full use of the advantages of the existing optical technologies and electronic technologies.

Characterized by a simple structure and protective automatic recovery, an optical burst ring network needs no large-scale fast optical switching matrix, and can manipulate the existing popularized optical ring network structure to protect the existing investments. Therefore, the optical burst switching ring network based on a ring topology is of practical significance.

In recent years, the optical burst ring network is regarded as an ideal switching mode of the next-generation all-optical Internet, and arouses more and more attention.

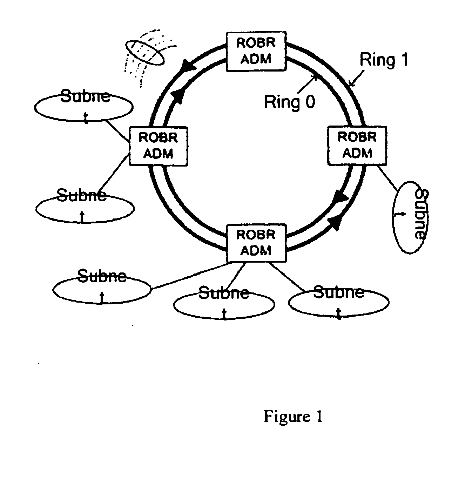

Figure 1 shows the structure of a Resilient Optical Burst Ring (ROBR) in the prior art.

An ROBR is an optical burst switching ring network that integrates a Resilient Packet Ring (RPR) and OBS. The ROBR has an inverse dual-ring structure like the RPR. By integrating the OBS features into the standardized RPR control protocol, the ROBR implements offset time management, protection and restoration, and dynamic fair bandwidth allocation of optical burst rings. Moreover, the BDP is transmitted in the all-optical mode, and is transparent to the data packet format and rate. The ROBR is characterized by: compared with the RPR, the ROBR reserves channel resources unidirectionally and is specific to a data channel group and a control channel group respectively; compared with the OBS, the ROBR adopts a ring network structure and a control mode based on the resilient packet ring.

Figure 1 shows the structure of an ROBR network. An ROBR is in an inverse dual-ring structure. The outer ring is generally known as ring 1, and the inner ring is generally known as ring 0. Each ring has N+1 wavelength channels, including one control channel and N data channels. The control channel is intended for transmitting BCPs, and the data channels are intended for transmitting BDPs. The ROBR node encapsulates the data packets that come from the local subnet and will pass through the ROBR network into a BDP, and sends the BDP to a ring (determined by the ring selection mode) by means of burst switching. The data packets directed to the local subnet are diverted to the corresponding subnet. Moreover, the ROBR node drops or passes through the BCP and the corresponding BDP according to the information in the BCP received from the control channel. The BDP dropped to the local node is restored to the original data packet (such as an IP packet) and then diverted to the corresponding subnet. Table 1 is a comparison of characteristics between an RPR network and an ROBR network.

**Table 1 Comparison between characteristics of an RPR network and an ROBR network**

| | |
|---|---|
| Network conditions corresponding to RPR protection and restoration | Optical/electric/optical, point-to-point, packet header being together with the data packet, two-fiber bidirectional ring |
| Network conditions corresponding to ROBR protection and restoration | Optical-electric combination (optical/electric/optical for BCP, all optical for BDP), BCP header separated from the BDP, two-fiber bidirectional ring |

The previous comparison indicates that the ROBR differs from the RPR in that:
1. In the ROBR, the BCP header is separated from the BDP in terms of time and wavelength; and
2. The data channel in the ROBR is all-optical and is not point-to-point.

Protection and restoration is one of the linchpins for implementing operable networks. However, no research on protection and restoration of optical burst ring networks has been reported by now. Namely, a problem is that the prior art provides no protection and restoration of optical burst ring networks.

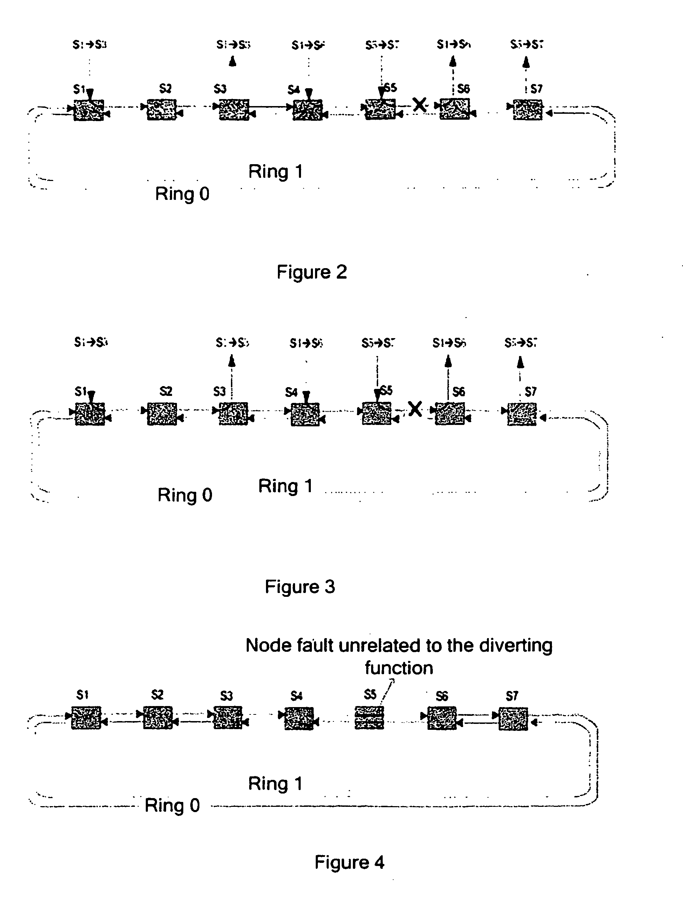

The RPR failover scheme is described below with reference to Table 2, Figure 2 and Figure 3.

Figure 2 shows the RPR steering mode in the prior art, Figure 3 shows the RPR wrapping mode in the prior art, and Figure 4 shows the RPR passthrough mode in the prior art.

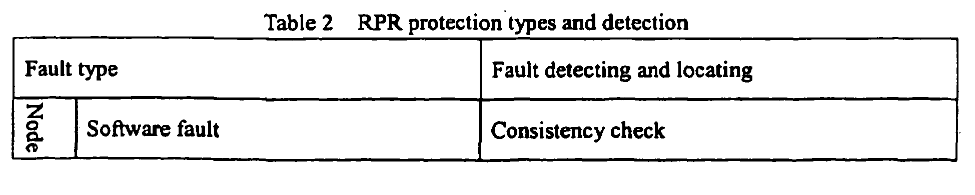

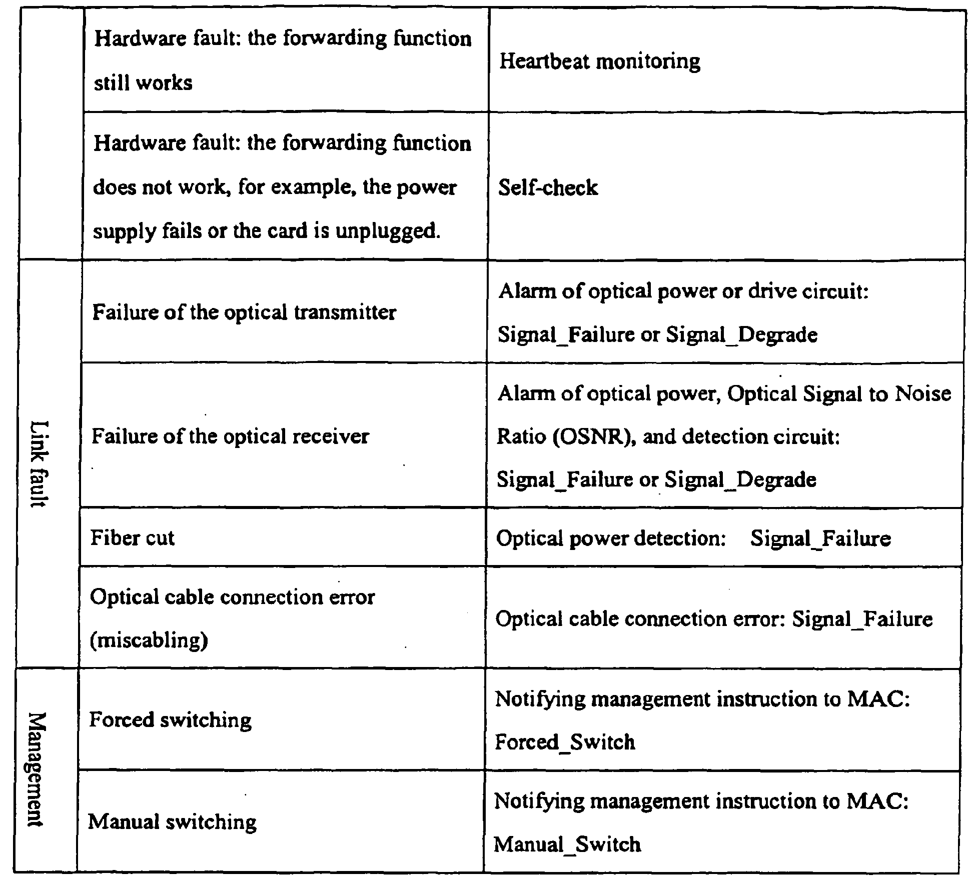

The RPR has three fault handling modes:
steering mode: When a fault occurs, each node (from S1 to S7) switches the data under protection to another ring directed to the destination. Every node must support this mode. (See Figure 2)
wrapping mode: When a fault occurs, the node near the faulty node wraps the service to a reverse ring. This mode is optional. (See Figure 3)
passthrough mode: When a software/hardware fault that does not affect the diverting function occurs inside a node, the node becomes a repeater for diverting all packets. This mode is optional. (See Figure 4)

Through the previous comparison, the RPR differs from the ROBR with respect to some features. In particular, the packet header is combined with the data packet in the RPR, while the data channel is separated from the control channel in the ROBR, which makes the RPR fault handling and the whole failover mode inapplicable to the ROBR.

International patent application WO 2006030435 A2 discloses an efficient protection mechanism for ring-based label-switching networks, such as multi-protocol label switching (MPLS) networks. The protection mechanisms are designed to protect point-to-multipoint label switching paths (LSPs).

International patent application WO 2005062578 A2 discloses a method and system for routing high-speed data to and from SANS (Storage Area Networks and Server Area Networks) via optical burst-switched (OBS) networks. OBS network components, including edge nodes and switching nodes, are coupled between SAN islands.

United State patent application US 2004234263 A1 discloses an optical network, which includes edge and switching nodes, optically communicate information formatted into bursts that are included in one or more optical channel transport unit (OTU) frames that are based on ITU-T recommendation G.709.

European patent application EP 1411666 A2 discloses a two-fiber optical ring network having a plurality of nodes linked by first and second fiber optic links, wherein each node comprises a first splitting section for splitting optical signals from optical signals traveling through the first fiber into the protection channels; a first add/drop section for performing adding and/or dropping optical signals passing through the first splitting section to a plurality of channels; a first switching section for combining optical signals in the protection channels to the first fiber when there is no link failure between adjacent nodes and for combining optical signals in the protection channels to the second fiber when there is a link failure between adjacent nodes; ; and, a controlling section for identifying whether or not the an optical link failure occurs in the fibers and for generating a control signal to activate a restoration process according to the identified outcome.

United State patent application US 2004057375 A1 discloses a ring topology network, a number of nodes interconnect transmission links to form first and second working rings and first and second optical protection rings in a ring topology. Multiple working paths are established on each working ring and multiple protection paths are established on each protection ring corresponding to the working paths.

United State patent application US 2003206521 A1 discloses a method consisting of the coordinated application of novel ways to format and assemble bursts, route them, make/release bandwidth reservation, and in addition, provide for failure recovery and contention resolution among priority classes of packets and bursts within Optical Burst Switched, Labeled Optical Burst Switched, Labeled Analog Burst Switched, and other bufferless, burst switched networks.

United State patent application US 2003067919 A1 discloses an integrated network architecture called Labeled Analog Burst Switching (LABS) using enhanced/extended MPLS as a control plane and extended Optical Burst Switching as a switching paradigm that avoids the need for buffer memory or other data delay devices at intermediate nodes is proposed.

United State patent application US 2002118414 A1 discloses an optical path setting method sets a two-way current optical path on the same route between two nodes, and sets a two-way spare optical path on a route reverse to the current optical path. The optical path accommodation efficiency is increased by sharing one spare optical path among a plurality of current optical paths having different routes.

European patent application EP 1126649 A2 discloses a local node for use in a synchronous optical network ring. The local node includes a group of working transmission lines and a protection line for connecting to a remote node, a control unit for monitoring the working transmission lines and, upon detection of a data transmission impairment over a particular working transmission line, invoking a protection switch event causing re-routing of optical signals from the particular working transmission line to the protection line.

### SUMMARY

The present invention provides a method and an apparatus for failover of a Resilient Optical Burst Ring (ROBR) and a fault handling method, intended to be applicable to the ROBR characterized by separating control channels from data channels.

An ROBR fault handling method provided in an embodiment of the present invention includes: when a control channel fails, applying the steering mode; when one or more data channels fail, stopping use of the faulty data channels; for normal condition data channels, continuing use of the normal condition data channels.

A Resilient Optical Burst Ring, ROBR, failover apparatus provided in an embodiment of the present invention includes:
a protection switching module (30), adapted to performing a steering mode when a control channel fails; and performing a mode of stopping use of the faulty data channel and continuing use of normal condition data channels when a data channel fails.

.As can be seen from the previous technical solution that, in an embodiment of the present invention, the ROBR network faults are handled effectively without delaying packet transmission by using this fault handling method: when a control channel fails, applying the steering mode; when one or more data channels fail, stopping use of the faulty data channels; for normal condition data channels, continuing use of the normal condition data channels.

### BRIEF DESCRIPTION OF THE DRAWINGS

Figure 1 shows the structure of an ROBR.

Figure 2 shows the steering mode of an RPR.

Figure 3 shows the wrapping mode of an RPR.

Figure 4 shows the passthrough mode of an RPR.

Figure 5 is a flowchart of the ROBR failover method according to a first embodiment of the present invention.

Figure 6 shows the structure of an ROBR failover apparatus in an embodiment of the present invention.

Figure 7 shows the flowchart of the ROBR failover method according to a second embodiment of the present invention.

Figure 8 shows the logic architecture of an ROBR node in an embodiment of the present invention.

Figure 9 is a flowchart of the fault handling method in an embodiment of the present invention.

Figure 10A to Figure 10F show different states of ROBR fault handling in the embodiment shown in Figure 9.

### DETAILED DESCRIPTION

The present invention is hereinafter described in detail with reference to accompanying drawings and preferred embodiments.

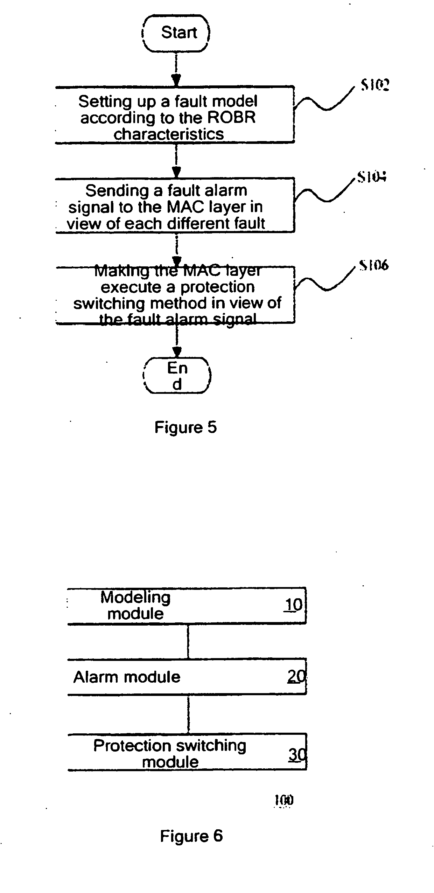

See Figure 5, which is a flowchart of the ROBR failover method according to the first embodiment of the present invention; and Figure 6, which shows the structure of an ROBR failover apparatus according to an embodiment of the present invention.

The principles for fulfilling the previous objectives are: First, setting up an ROBR fault model and the corresponding fault detection method; and then specifying a fault alarm signal to be sent to the MAC layer in view of each different fault; and finally, specifying the protection switching method of the MAC layer in different fault conditions.

Specifically, as shown in Figure 5, the failover method under the present invention includes the steps as described hereinafter.

Step S102: setting up a fault model in view of the ROBR characteristics, in which the fault model covers different fault types corresponding to the characteristics.

Step S104: sending a fault alarm signal to the MAC layer in view of each different fault.

Step S106: The MAC layer executes a protection switching method in view of the fault alarm signal.

Specifically, as shown in Figure 6, the failover apparatus 100 under the present invention includes:
a modeling module 10, adapted to set up a fault model in view of the ROBR characteristics, in which the fault model covers different fault types corresponding to the characteristics;
a signal creating model 20, adapted to send a proper fault alarm signal to the MAC layer in view of the fault type; a signal creating model 20 further includes a link monitoring submodule, adapted to determine the type of the fault through fault detecting and locating, in which the fault detecting is performed in a mode of separating data channels from control channels; and
a protection switching module 30, adapted to enable the MAC layer to execute the protection switching method in view of the fault alarm signal. A protection switching module includes: a first processing submodule, adapted to execute the steering mode with offset time adjustment when the alarm signal corresponds to a control channel fault, and a second processing submodule, adapted to stop use of the faulty data channel when the alarm signal corresponds to a data channel fault, and continue use of the remaining normal condition data channels.

The first processing submodule further includes: a broadcasting unit, adapted to cause the second node that detects a fault to broadcast a fault notification; a offset time setting unit, adapted to cause the first node that detects and/or receives a fault notification locally to divert the service that is originated from the current node and passes through the second node to the ring directed to the destination node, and adjust the offset time; and a discarding unit, adapted to discard the service that passes through the first node and needs to be protected.

The second processing submodule includes: (i) a first stopping unit, adapted to make the first node stop using the corresponding data channel when the fault is located on the output port of the first node that detects the fault, and make the first node send a fault notification to the adjacent upstream node through a control channel of the reverse ring if the first node does not support wavelength conversion; (ii) a second stopping unit, adapted to make the first node send a fault notification through a control channel of the reverse ring when the fault is located on the input port of the first node; (iii) a third stopping unit, adapted to cause the upstream node that receives the data channel fault notification to disable the corresponding data channel; and (iv) a fourth stopping unit, adapted to make the upstream node divert the fault notification when the upstream node does not support wavelength conversion, or make the upstream node absorb the fault notification if the upstream node supports wavelength conversion.

Preferably, if the fault model created by the modeling model 10 further covers the node faults unrelated to the passthrough mode, the protection switching module 30 will further include a third processing submodule, adapted to perform passthrough processing when the alarm signal corresponds to a node fault unrelated to passthrough; the third processing submodule further includes (i) a diverting unit, adapted to make the control card of the faulty node divert the upstream control packets directly; and (ii) a passthrough setting unit, adapted to set all channels of the Optical Add/Drop Multiplexer (OADM) to the passthrough mode.

Preferably, if the fault model created by the modeling module 10 covers the node faults and/or link faults related to passthrough, the first processing submodule is further adapted to execute the steering processing with offset time adjustment when the alarm signal corresponds to the node faults and/or link faults related to passthrough.

The internal structure of an ROBR failover apparatus under the present invention, as logically described above, will be elaborated in more detail below. As shown in Figure 1, the structure of an ROBR network is characterized by: the structure consists of two reverse rings; each ring has N+1 wavelength channels, including 1 control channel and N data channels; the control channel is intended for transmitting BCPs and data channels are intended for transmitting BDPs; the ROBR node encapsulates the data packets that come from the local subnet and needs to pass through the ROBR network into a BDP, and sends the BDP to a ring (determined by the ring selection mode) by means of burst switching; the data packets directed to a local subnet are diverted to the corresponding subnet; moreover, the ROBR node drops or passes through the BCP and the corresponding BDP according to the information in the BCP received from the control channel; the BDP dropped to the local node is recovered back to the original data packet (such as an IP packet) and then diverted to the corresponding subnet.

The fault type, the method of fault detecting and locating, and the signal sent to the MAC layer are created in view of the ROBR characteristics according to an embodiment of the present invention, as shown in Table 3.

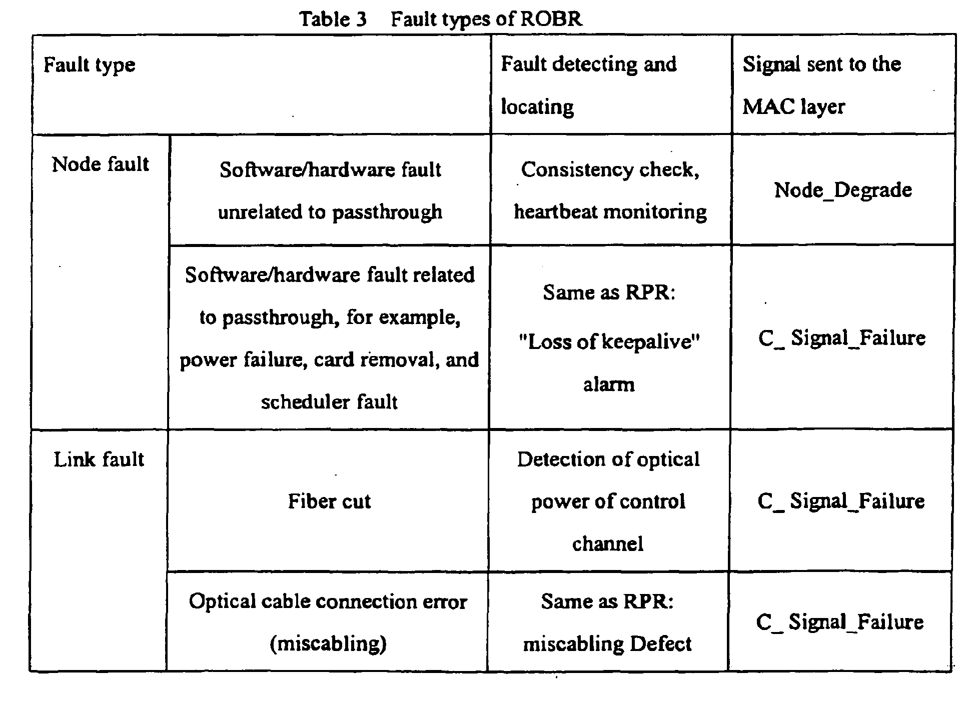

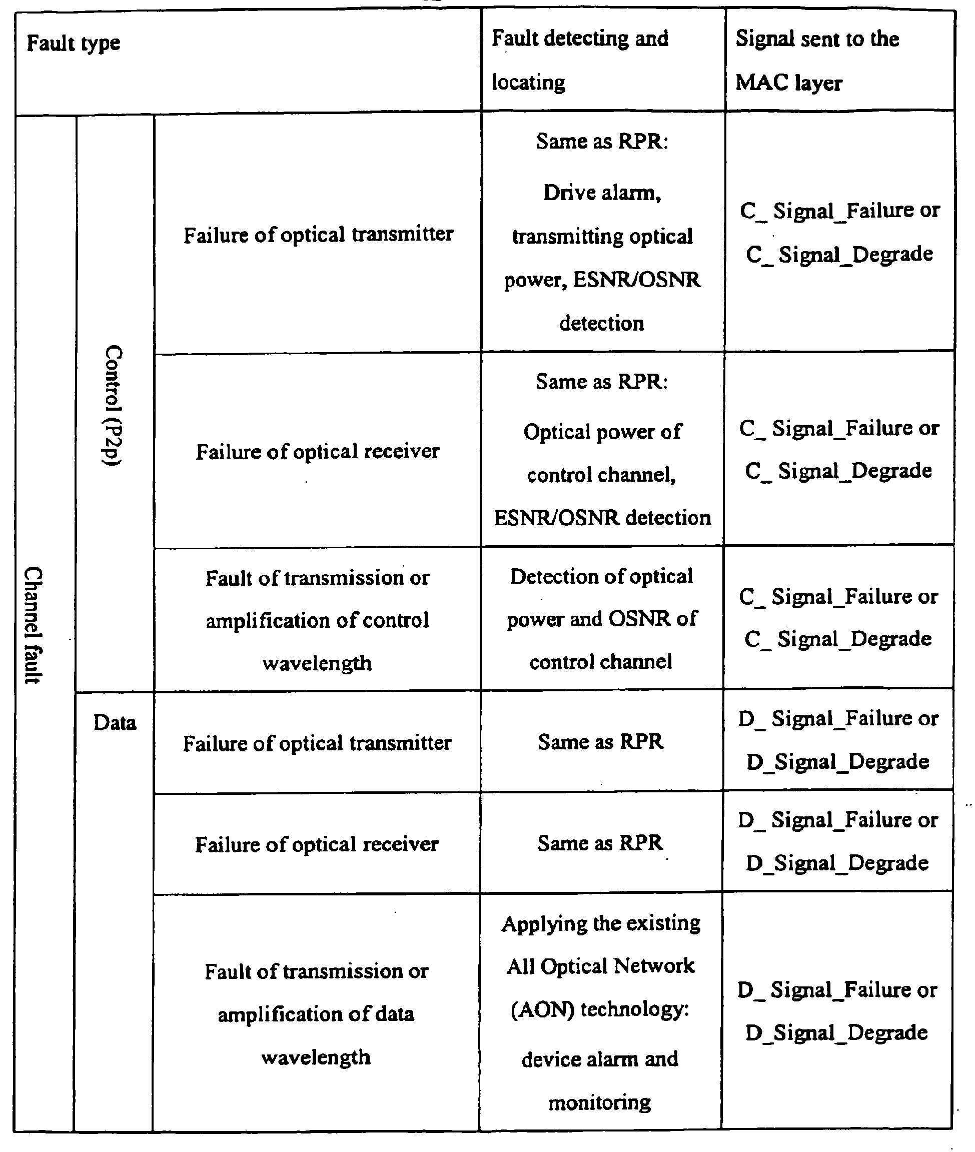

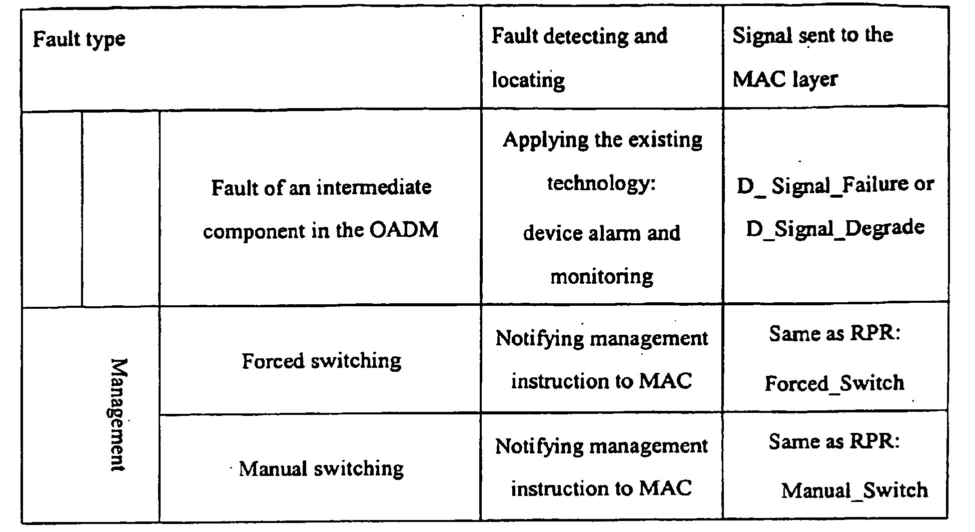

The present invention applies the method as described hereinafter to detect and locate the faults listed above, in order to perform step S102 shown in Figure 5.

The control channel undergoes optical-electric conversion on each node and the signals are converted to electric signals, so a physical layer detection mode similar to the mode of RPR is applied to fault detection of control channels in the present invention. The physical layer sends a C_Signal_Failure indication to the failover module of the MAC layer after detecting failure or serious degrade of the control channel, and sends a C_Signal_Degrade indication to the failover module of the MAC layer after detecting signal degrade of the control channel.

Link faults are detected through a control channel, and the method for indicating a link fault is the same as the method for indicating a control channel fault. That is because a control channel is part of the corresponding link, a link fault certainly leads to the fault of the corresponding control channel, but a control channel fault does not necessarily lead to a link fault. Moreover, the impact from a link fault is equivalent to the impact from a control channel fault in the burst switching mode.

Software faults of a node are detected through any software fault detection method in the prior art. If the faulty software does not affect the diverting of upstream control packets and data packets, a Node_Degrade fault indication will be sent; otherwise, a C_Signal_Failure indication will be sent. The hardware alarm signal of the node is used for detecting faults of the corresponding hardware. According to the function of the faulty hardware, the Node_Degrade or C_Signal_Failure indication is sent.

The faults of data channels are detected through relevant alarm signals such as transceiver module alarm and Optical Add/Drop Multiplexer (OADM) monitoring alarm, and a D_Signal_Failure (i)/D_Signal_Degrade (i) indication is sent to indicate failure or degrade of the signals of number i data channel.

Moreover, the present invention applies a "keepalive" fault detection mode on the MAC layer so that the MAC layer of each node sends keepalive messages periodically through control channels. If the downstream node fails to receive the keepalive message within the specified time limit, it is deemed that the upstream node, the control channel or the fiber link fails, and the downstream node will send a C_Signal_Failure indication to the failover module.

The present invention applies a different failover method specific to each different fault.

For the node fault unrelated to signal diverting (Node_Degrade indication is received), the passthrough mode is applied. In this case, the control card of the faulty node diverts the upstream control packet directly, and sets all channels of the OADM of the faulty node to the passthrough mode.

For link faults, control channel faults and node faults related to passthrough (C_Signal_Failure/C_Signal_Degrade indication or fault notification is received), the steering failover method with offset time adjustment is applied. The node that detects the corresponding fault will broadcast the notification of this fault type. The current node that detects and/or receives the notification of this fault type will divert the service that comes from this node and passes through the faulty node (called "service under protection") to the ring directed to the destination node, and adjust the offset time and discard the service under protection that passes through this node.

For the fault of a single data channel (a D_Signal_Failure(i)/D_Signal_Degrade(i) indication or a fault notification is received), the failover method applied under the present invention is to stop use of the faulty data channel. If the fault is located on an output port of the node that detects the fault (called "data channel fault located at the output port"), the node that detects the fault will stop using the faulty data channel; and, if the node does not support wavelength conversion, the node will send a fault notification to the adjacent upstream node through a control channel of the reverse ring; if the fault is located on an input port of the node that detects the fault, the node will send a fault notification through a control channel of the reverse ring. The upstream node that receives the data channel fault notification disables the corresponding channel. In this case, if the upstream node does not support wavelength conversion, the node will forward the fault notification; if the upstream node supports wavelength conversion, the node will absorb the fault notification.

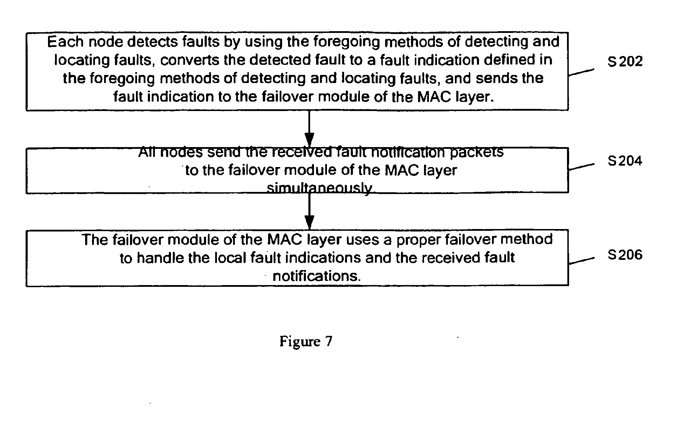

Figure 7 shows the flowchart of the ROBR failover method according to the second embodiment of the present invention.

Based on the previous principles and methods, as shown in Figure 7, the ROBR failover process according to the present invention includes the steps as described hereinafter.

Step S202: Each node detects faults by using the previous methods of detecting and locating faults, converts the detected fault to a fault indication defined in the previous methods of detecting and locating faults, and sends the fault indication to the failover module of the MAC layer.

Step S204: All nodes send the received fault notification packets to the failover module of the MAC layer simultaneously.

Step S206: The failover module of the MAC layer uses a proper failover method to handle the local fault indications and the received fault notifications.

In the process of handling fault indications, the failover module performs proper actions in view of the fault indication type.

If the fault indication is Node_Degrade, the control card of the current node diverts the upstream control packet directly, and sets all channels of the OADM to the passthrough mode.

If the fault indication is fC_Signal_Failure and there is a normal ring or a ring with the C_Signal_Degrade fault, which can send the service that is originated from the current node and passes through the faulty node to the destination node, the current node will adjust the offset time of the service and divert the service to the normal ring or the ring with a C_Signal_Degrade fault. Then the current node will broadcast the C_Signal_Failure notification through the control channels of the inner ring and the outer ring.

If the fault indication is C_Signal_Degrade and there is a normal ring which can send the service that is originated from the current node and passes through the faulty node to the destination node, the current node will adjust the offset time of the service and divert the service to the normal ring, and broadcast the C_Signal_Degrade fault notification through the control channels of the inner ring and the outer ring.

If the fault indication is D_Signal_Failure(i)/D_Signal_Degrade(i) and the data channel fault is located on an output port, the current node will stop using the faulty data channel; and, if the current node does not support wavelength conversion, the current node will send a fault notification to the adjacent upstream node through a control channel of the reverse ring. If the data channel fault is located on an input port, the current node will send a fault notification to the adjacent upstream node through a control channel of the reverse ring.

What described below is a process of handling fault notifications. The failover module performs proper actions in view of the type of the received fault notification.

If the fault notification is of the C_Signal_Failure type and the current node has received a notification of the same fault from another ring, the current node will absorb the fault notification; otherwise, if there is a normal ring or a ring with the C_Signal_Degrade fault, which can send the service that is originated from the current node and passes through the faulty node to the destination node, the current node will adjust the offset time of the service and forward the service to the normal ring or the ring with a C_Signal_Degrade fault. If the fault notification comes from the faulty ring, and the current node is adjacent to the faulty node (called a "common-ring adjacent faulty node"), the current node will absorb the fault notification. Otherwise, the current node will forward the fault notification to the downstream node through a control channel.

If the fault notification is of the C_Signal_Degrade type and the current node has received a notification of the same fault from another ring, the current node will absorb the fault notification; otherwise, if there is a normal ring or a ring which can send the service that is originated from the current node and passes through the faulty node to the destination node, the current node will adjust the offset time of the service and divert the service to the normal ring. If the fault notification comes from the faulty ring and the current node is adjacent to the faulty node (called a "common-ring adjacent faulty node"), the current node will absorb the fault notification. Otherwise, the current node will forward the fault notification to the downstream node through a control channel.

If the fault notification is of the D_Signal_Faiture(i)/D_Signal_Degrade(i) type, the current node will stop using the data channel. If the current node does not support wavelength conversion, the current node will forward the fault notification to the downstream node; if the current node supports wavelength conversion, the current node will absorb the fault notification.

It should be noted that the operation after receiving the management instruction is the same as the operation after receiving the C_Signal_Failure signal, except the preference order of handling. The operation is the same as handling a RPR, and will not be repeated here any further.

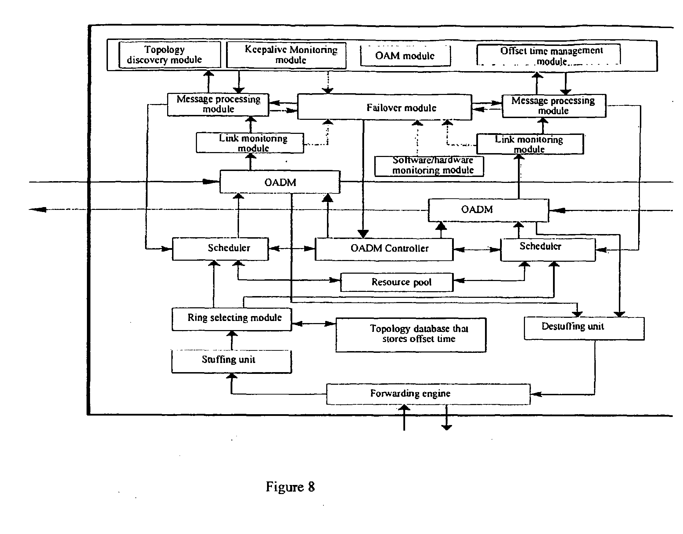

The present invention is hereinafter described in detail with reference to preferred embodiments and Figure 8 ~ Figure 10.

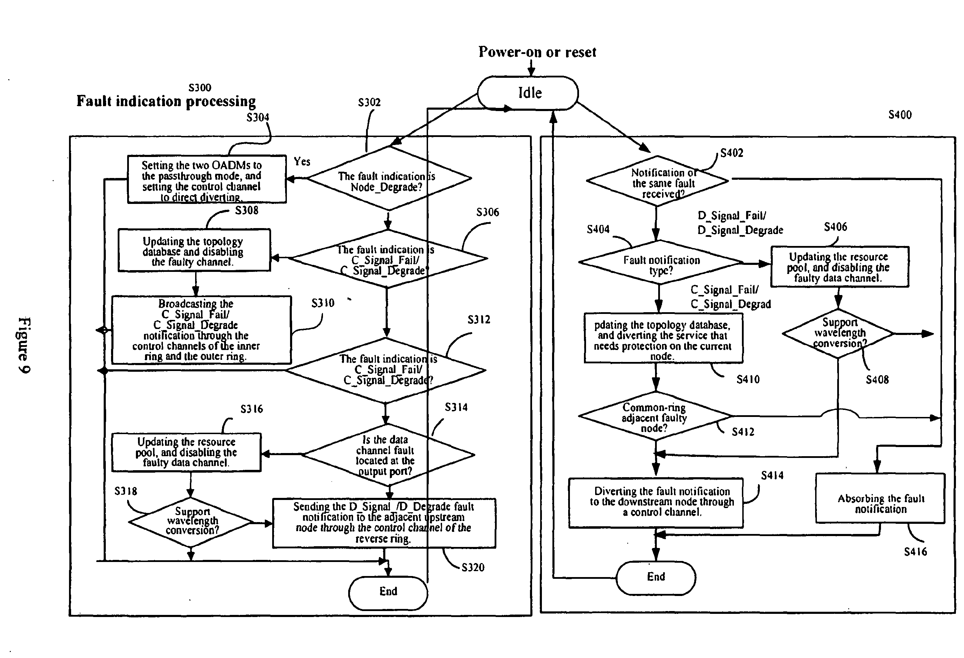

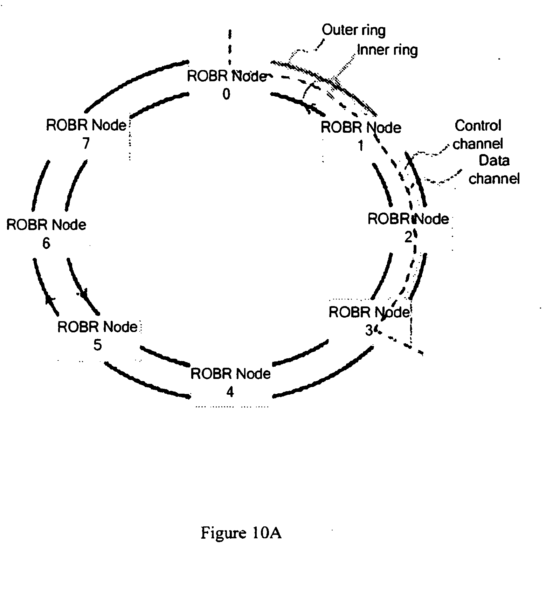

Figure 8 shows the logic architecture of an ROBR node in an embodiment of the present invention; Figure 9 is a flowchart of the failover process in an embodiment of the present invention; Figure 10A to Figure 10F show different states of ROBR fault handling in an embodiment of the present invention.

As shown in Figure 8, a logic architecture of an ROBR node in an embodiment of the present invention includes: a forwarding engine, an assembling unit, a disassembling unit, a ring selecting module, a topology database with offset time, a resource pool, two OADMs, two link monitoring modules, two message processing modules, and two schedulers (each ring has a scheduler), an OADM controller, a failover module, a keepalive monitoring module, a topology discovery module, an Operation Administration and Maintenance (OAM) module, an offset time management module, and a software/hardware monitoring module.

The diverting engine is adapted to forward access data packets. The data packets that need to pass through the ROBR network are diverted to the assembling unit, and the data directed to the local node are diverted to the corresponding subnet.

The assembling unit is adapted to assemble the data packets that need to be added to the ROBR network into Burst Data Packets (BDPs); and the disassembling unit is adapted to recover the BDPs back to access data packets and sending them to the forwarding engine.

The ring selecting module is adapted to query the topology database with offset time to determine the ring that sends the burst data and determine the offset time.

The topology database with offset time is adapted to store the topology information of the whole ring and the offset time required for transmission from the current node to every other node. The offset time is updated by the offset time management module.

The message processing module is adapted to receive the messages from the control channel and the local control and management modules, and distribute messages. The fault notifications directed to the local node are distributed to the failover module; the BCPs directed to the local node are distributed to the receiving and processing module, which sets an OADM through an OADM controller to receive the BDPs according to the information in the BCP; the messages directed to other local control and management modules are distributed to the corresponding control and management modules; the BCPs that need to be diverted, the local outgoing fault notifications and management maintenance messages (such as topology discovery and offset time management messages) are sent to the scheduling module.

The scheduler is adapted to allocate resources for the management and control packets, BCPs and BDPs according to the information in the resource pool.

The resource pool is adapted to store the resources of every output port of the current node and the states of utilizing the resources.

The functions of the topology discovery module and the OAM module are similar to those of an RPR.

The Keepalive monitoring module is adapted to implement the keepalive fault detection function of the MAC layer. The OADM controller is a control interface of the OADM, through which the state of each channel of the OADM is controlled (add, drop or passthrough).

The failover module is adapted to receive the fault information sent from the control channel, link monitoring module, software/hardware monitoring module and the Keepalive monitoring module, identifying the fault type and performing proper actions.

As shown in Figure 9, the failover process of a failover module includes the steps as described hereinafter.

After the system is powered on or reset, the failover module enters the idle state, waiting for incoming fault indications and fault notifications; upon receiving a local fault indication (namely, detecting a fault), the failover module enters the fault indication processing state S300. Upon receiving a fault notification, the failover module enters the fault notification processing state S400. Upon completion of processing a fault indication or a fault notification, the failover module returns to the idle state, waiting for new fault indications and fault notifications;
wherein,
the fault indication processing procedure S300 includes the following steps:
the fault indication processing procedure S300 begins;
Step S302: judging whether the fault indication is Node_Degrade. If so, the procedure goes to step S304, or else step S306;
Step S304: setting the two OADMs to the passthrough mode, and setting the control channel to direct diverting;
Step S306: judging whether the fault indication is C_Signal_Fail/C_Signal_Degrade. If so, the procedure goes to step S308, or else step S312;
Step S308: updating the topology database and disabling the faulty channel;
Step S310: broadcasting the C_signal_Fail/C_Signal_Degrade fault notification through control channel of the inner ring and the outer ring, and then finishing the processing;
Step S312: judging whether the fault indication is D_SIGNAL_FAIL/D_Signal_Degrade. If so, the procedure goes to step S314; otherwise, the processing is finished;
Step S314: judging whether the data channel fault is located on an output port. If so, the procedure goes to step S316, or else step S320;
Step S316: updating the resource pool, and disabling the faulty data channel;
Step S318: judging whether the node supports wavelength conversion. If so, the processing is finished; otherwise, the procedure goes to step S320; and
Step S320: sending the D_Signal_Fail/D_Signal_Degrade fault notification to the adjacent upstream node through the control channel of the reverse ring;
then the fault indication processing procedure S300 is finished, and the failover module returns to the idle state.
the fault notification processing procedure S400 includes the following steps:
   the fault notification processing procedure S400 begins;
   Step S402: judging whether the same fault notification is received. If so, the procedure goes to step S416, or else step S404;
   Step S404: determining the type of the fault message. If the fault message is of the D_Signal_Failure/D_Signal_Degrade type, the procedure goes to step S406; if the fault message is of the C_Signal_Failure/C_Signal_Degrade type, the procedure goes to step S410;
   Step S406: Updating the resource pool, and disabling the faulty data channel;
   Step S408: judging whether the node supports wavelength conversion. If wavelength conversion is supported, the procedure goes to step S416, or else step S414;
   Step S410: updating the topology database, and diverting the service that needs protection on the current node;
   Step S412: judging whether the node is a common-ring adjacent faulty node. If so, the procedure goes to step S416, or else step S414;
   Step S414: diverting the fault message to the downstream node through a control channel, and then finishing the processing procedure; and
   Step S416: absorbing the fault message;
   Then the fault notification processing procedure S400 is finished, and the failover module returns to the idle state.

Figure 10A to Figure 10F show different states of ROBR fault handling in the embodiment shown in Figure 9.

Figure 10A shows an ROBR with eight nodes, each of which has a structure shown in Figure 8. The nodes are not capable of forwarding wavelengths except nodes 1, 3, 5 and 7. Before the fault occurs, node 0 sends data to node 3 through an outer ring by means of burst switching.

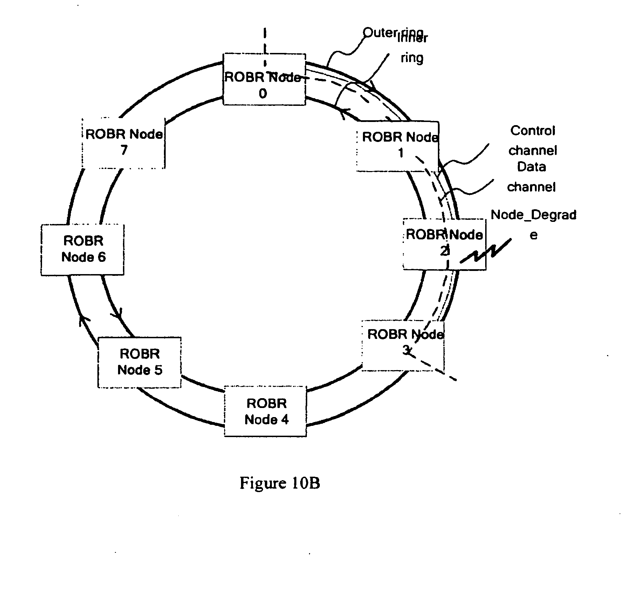

Figure 10B shows the circumstance that a fault occurs on node 2 without affecting diverting of messages. In this case, the failover module of node 2 receives a Node_Degrade fault indication from the corresponding fault monitoring module. The failover module of node 2 executes S302 and S304 shown in Figure 9, namely, sets the control card of the current node to the passthrough mode to divert the upstream control packets directly, and sets all channels of the two OADMs to the passthrough mode through the OADM controller.

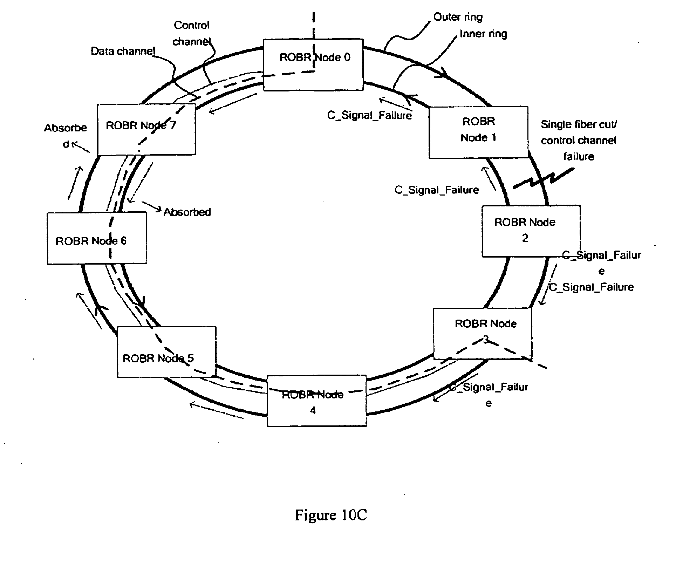

Figure 10C shows the circumstance that the outer ring fiber is cut or the control channel fails between node 1 and node 2. In this case, the link monitoring module of node 2 detects loss/failure of the signals of the outer ring control channel, and sends a C_Signal_Failure indication to the failover module of node 2, in which the failover module is equivalent to the protection switching module 30 that includes various processing submodules shown in Figure 6 (S306 in Figure 9). The failover module of node 2 updates the topology database that stores offset time, disables the faulty channel (S308 in Figure 9), and broadcasts the C_Signal_Failure notification through the control channels of the inner ring and the outer ring (S31 0 in Figure 9).

The message processing module of node 1 receives the C_Signal_Failure notification from the control channel of the inner ring, and distributes the notification to the failover module of node 1. The failover module of node 1 has not received notification of the same fault from the control channel of the outer ring (S402 in Figure 9), so the failover module updates the topology database that stores offset time (S410 in Figure 9). The fault notification is not received from the faulty ring (outer ring), so node 1 is not a common-ring adjacent node of the fault. Therefore, node 1 diverts the fault notification to node 0 through the control channel of the inner ring (S414 in Figure 9).

After receiving the C_Signal_Failure notification from the control channel of the inner ring, the failover module of node 0 updates the topology database that stores offset time. Consequently, the ring selecting module diverts the service, which is sent through the outer ring to node 3, to the inner ring, and then the service is sent to node 3 (S410 in Figure 9). Meanwhile, the fault notification is further sent to downstream nodes through the control channel of the inner ring (S414 in Figure 9).

After node 7 receives the C_Signal_Failure notification from the control channel of the inner ring, the failover module of node 7 updates the topology database that stores offset time, and further sends the fault notification to downstream nodes through the control channel of the inner ring.

When node 6 receives the C_Signal_Failure notification from the control channel of the inner ring, it discovers that the current node has received a notification of the same fault from the control channel of the outer ring. Therefore, node 6 absorbs the C_Signal_Failure notification which is broadcast along the control channel of the inner ring (S416 in Figure 9).

After nodes 3, 4, 5 and 6 receive the C_Signal_Failure notification from the control channel of the outer ring, the corresponding failover module updates the topology database that stores offset time, and further sends the fault notification to downstream nodes through the control channel of the outer ring. When the C_Signal_Failure notification broadcast along the control channel of the outer ring arrives at node 7, node 7 has received the C_Signal_Failure notification from the control channel of the inner ring. Therefore, node 7 absorbs the C_Signal_Failure notification that is broadcast along the control channel of the outer ring (S416 in Figure 9).

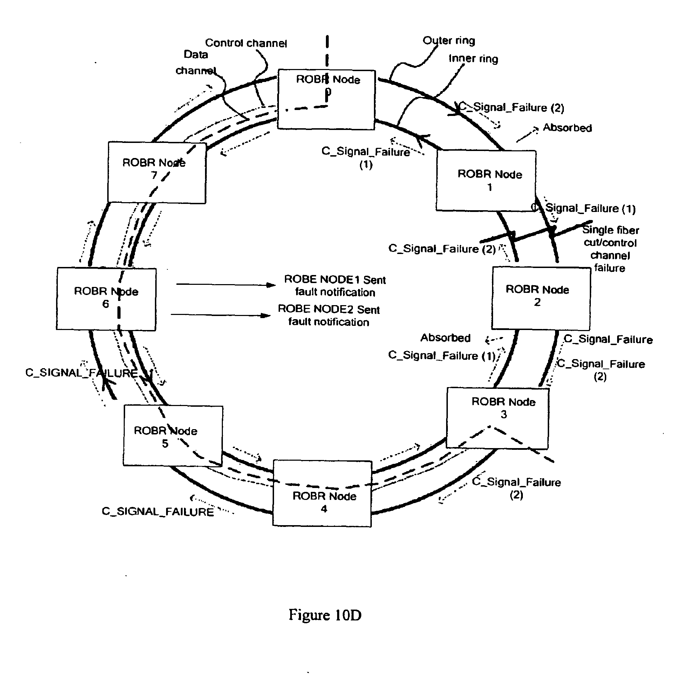

Figure 10D shows the circumstance that both the inner ring fiber and the outer ring fiber are cut or the control channels of both rings fail between node 1 and node 2. In this case, the link monitoring module of node 2 detects loss/failure of the signals of the outer ring control channel, and sends a C_Signal_Failure indication to the failover module of node 2 (S306 in Figure 9). The failover module of node 2 updates the topology database that stores offset time, disables the faulty channel (S308 in Figure 9), and broadcasts the C_Signal_Failure notification through the control channels of the inner ring and the outer ring (S310 in Figure 9). Meanwhile, the link monitoring module of node 1 detects loss/failure of the signals of the inner ring control channel, and executes the operation like node 2.

The C_Signal_Failure (2) notification which is broadcast by node 2 along the control channel of the inner ring is lost due to fiber cut of the inner ring. The C_Signal_Failure (1) notification which is broadcast by node 1 along the control channel of the outer ring is lost due to fiber cut of the outer ring.

After nodes 3, 4, 5, 6, 7 and 0 receive the C_Signal_Failure (2) notification (which is broadcast through the outer ring) from the control channel of the outer ring consecutively, each node updates the topology database that stores the offset time (S410 in Figure 9) and further sends the fault notification to downstream nodes through the control channel of the outer ring. After node 0 updates the topology database that stores offset time on node 0, the service previously sent to node 3 through the outer ring is diverted to the inner ring, and then sent to node 3 (as shown in Figure 10D). When the C_Signal_Failure(2) notification, which is broadcast by node 2 through the outer ring, arrives at node 1, node 1 updates the topology database that stores the offset time on node 1. Meanwhile, since the fault notification is received by the faulty ring (outer ring) and node 1 is a faulty adjacent node (called "common-ring adjacent faulty point"), so node 1 absorbs the fault notification.

The C_Signal_Failure (1) notification, which is broadcast by node 1 along the control channel of the inner ring, passes through nodes 0, 7, 6, 5, 4, 3 and 2 consecutively. Nodes 0, 7, 6, 5, 4 and 3 update the topology database that stores offset time on the respective node (S410 in Figure 1), and divert the fault notification through the control channel of the inner ring. Node 2 absorbs the fault notification because it is a common-ring adjacent faulty node of the fault notification.

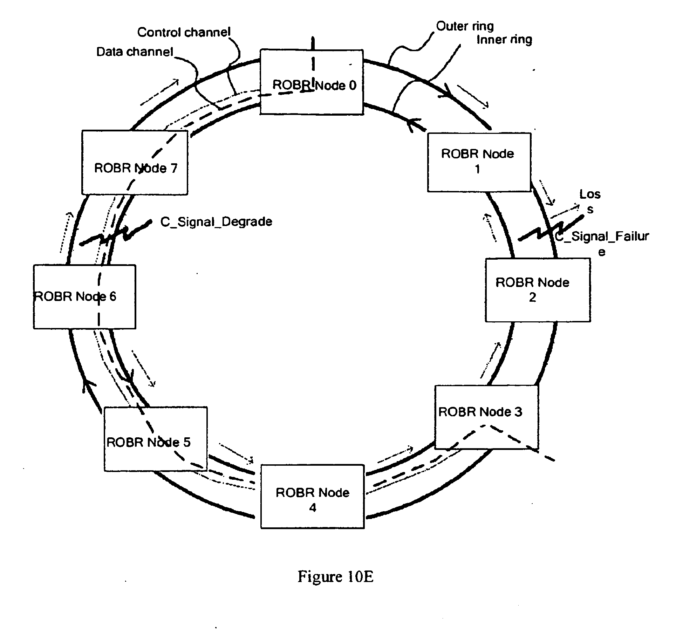

Figure 10E shows the circumstance that the inner ring between node 6 and node 7 incurs signal degrade again after the fault described in Figure 10C occurs. Node 6 detects signal degrade at the inner ring control channel, and sends a C_Signal_Degrade fault indication to the failover module of node 6 (S306 in Figure 9). Node 6 updates the topology database that stores offset time (S308 in Figure 9), and the number of hops of the inner ring channel between node 6 and node 7 is set to 254 (maximum number of nodes supported by the ring). Moreover, node 6 broadcasts the C_Signal_Degrade fault notification through the control channels of the inner ring and the outer ring (S310 in Figure 9).

The C_Signal_Degrade fault notification on the control channel of the outer ring arrives at nodes 7, 0, and 1 consecutively. Nodes 7, 0 and 1 update the topology database that stores offset time on the respective node, the number of hops of the inner ring channel between node 6 and node 7 is set to 254 (maximum number of nodes supported by the ring), and is diverted down through the control channel of the outer ring (S410 and S414 in Figure 9). After node 0 updates the topology database that stores offset time on node 0, and the service sent to node 3 through the inner ring will not be forwarded to the outer ring because the fault of outer ring fiber cut between node 1 and node 2 is more serious (marked as "disabled" in the topology database that stores offset time, equivalent to infinite number of hops). The ring selecting module will still select the inner ring for transmitting the service directed to node 3 based on the principle of minimum hop quantity. The fault notification diverted by node 1 through the outer ring is lost due to fiber cut of the outer ring.

The C_Signal_Degrade fault notification on the control channel of the inner ring passes through nodes 5, 4, 3 and 2 consecutively. Nodes 5, 4, 3 and 2 update the topology database that stores offset time on the respective node, the number of hops of the inner ring channel between node 6 and node 7 is set to 254 (maximum number of nodes supported by the ring), and is diverted down through the control channel of the inner ring (S410 and S414 in Figure 9). When node 1 receives the fault notification from the control channel of the inner ring, the fault notification is absorbed because node 1 has received a notification of the same fault from the outer ring (S402 and S416 in Figure 9).

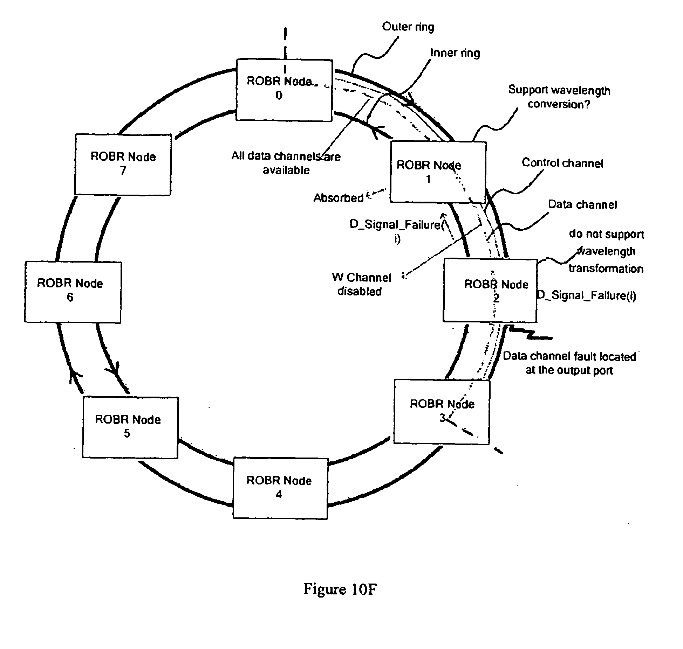

Figure 10F shows the circumstance of a data channel (Wᵢ) fault located at the output port on the outer ring between node 2 and node 3 in the ROBR shown in

Figure 10A. The data channel hardware detecting module of node 2 detects the fault, and sends a D_Signal_Failure(Wᵢ) indication to the failover module of node 2. The failover module of node 2 updates the resource pool to mark the wavelength Wᵢ in the output port of the outer ring as disabled (S316 in Figure 9). Since node 2 does not support wavelength conversion, node 2 sends a D_Signal_Failure(Wᵢ) notification to the adjacent upstream node 3 through the control channel of the inner ring (S320 in Figure 9). After receiving the D_Signal_Failure(Wᵢ) notification from the inner ring, node 1 updates the resource pool to mark the wavelength Wᵢ in the output port of the outer ring as disabled (S406 in Figure 9). Since node 1 supports wavelength conversion, the fault notification is absorbed by node 1 (S416 in Figure 9). Upon completion of the previous protection process, the service sent by node 0 to node 3 is still transmitted through the outer ring. Nevertheless, the service can use any data channel between node 0 and node 1; but can use only the data channels other than the channel with the wavelength Wᵢ between node 1 and node 3. The service carried on the channel with the wavelength Wᵢ between node 0 and node 1 must undergo wavelength conversion and be diverted to channels of other wavelengths at the output port of node 1.

Evidently, the failover method under the present invention is applicable not only to the ROBR of a dual-ring structure, but also to the ROBR of a multi-ring structure.

In the final analysis, the embodiments of the present invention provide the benefits as detailed hereinafter.

The ROBR failover and the methods thereof provided by the present invention are an effective fault handling solution to the circumstance where the control channel is separated from the data channel in the ROBR. Furthermore, multiple detecting and locating methods that cover data channels and control channels are provided in the present invention to accomplish consistency between the control channel and the data channel during a failover action; accomplish fast protection and recovery of services after an ROBR node and/or link fails; improve the robustness of the ROBR and make it a reliably operable network; and enable adding and deleting of a node without *interrupting services.

The embodiments described above are only better ones of this invention, and they are not meant to confine the protection scope of this invention. The technicians in this field may make various changes and variations to the present invention. It is apparent that those skilled in the art can make various modifications and variations to the invention without departing from the scope of the invention. The invention is intended to cover the modifications and variations provided that they fall in the scope of protection defined by the following claims.

## Claims

1. A method for handling Resilient Optical Burst Ring, ROBR, fault, comprising:
applying a steering mode when a control channel fails; and
applying a mode of stopping use of the faulty data channel and continuing use of normal condition data channels when a data channel fails.

2. The method according to claim 1, further comprising: setting up (S102) a fault model in view of the ROBR characteristics, wherein the fault model covers at least control channel faults and data channel faults.

3. The method according to claim 2, further comprising: sending (S104) a corresponding fault alarm signal to Media Access Control, MAC, layer when at least one fault covered by the faults model occurs.

4. The method according to any one of claim 1 to 3, wherein fault types of control channels comprise control signal failure and control signal degrade, and the steering mode when a control channel fails comprises:
diverting a service if the fault type of a control channel on a ring is control signal failure;
diverting a service if the fault type of a control channel on a ring is control signal degrade and the reverse ring is normal; and
keeping a current processing ring direction unchanged if the fault type of a control channel on a ring is control signal degrade and the fault type on the reverse ring is control signal failure.

5. The method according to any one of claim 1 to 3, wherein the mode of stopping use of the faulty data channel comprises:
stopping, by a first node, use of the faulty data channel if the faulty data channel fault is located on an output port of the first node of the fault; and sending a fault notification to an adjacent upstream node through a control channel of the reverse ring if the first node does not support wavelength conversion;
sending a fault notification through a control channel of the reverse ring if the data channel fault is located on the input port of the first node; and
setting, by the adjacent upstream node that receives the fault notification of the data channel, the faulty data channel as disabled; diverting the fault notification if the adjacent upstream node does not support wavelength conversion; and absorbing the fault notification if the adjacent upstream node supports wavelength conversion.

6. The method according to any of claim 1 to claim 5, further comprising:
performing the steering mode with offset time adjustment in the case of a link fault or a fault related to passthrough; and/or
applying a pass-through mode in the case of a node fault unrelated to signal diverting.

7. The method according to claim 6, wherein the passthrough mode comprises:
making a control card of the faulty node divert the upstream control packet directly; and
setting all channels of Optical Add/Drop Multiplexer, OADM, as passthrough.

8. The method for handling faults according to any of claim 1 to claim 5, wherein the steering mode is accompanied by offset time adjustment.

9. The method for handling faults according to claim 8, wherein the steering mode with offset time adjustment comprises:
broadcasting, by a second node that detects the fault, the fault notification; and
diverting, by the first node which detects and/or receives the fault notification locally, the service that comes from the first node and passes through the second node to the ring directed to the destination node, and adjusting the offset time, and discarding the service under protection that passes through the first node.

10. The method according to any one of claim 1 to claim 9, wherein the fault type is determined through fault detecting and locating; and the fault detecting is performed in the mode of separating the data channel from the control channel.

11. A Resilient Optical Burst Ring, ROBR, failover handling apparatus, comprising:
a protection switching module (30), adapted to performing a steering mode when a control channel fails; and performing a mode of stopping use of the faulty data channel and continuing use of normal condition data channels when a data channel fails.

12. The apparatus according to claim 11, further comprising:
a modeling module (10), adapted to set up a fault model in view of the ROBR characteristics, wherein the fault model covers at least control channel faults and data channel faults.

13. The apparatus according to claim 12, further comprising:
a signal creating module (20), adapted to send a proper fault alarm signal to the MAC layer when at least one fault covered by the fault model occurs.

14. The apparatus according to any one of claim 13, wherein the protection switching module (30) comprises:
a first processing submodule, adapted to execute the steering mode with offset time adjustment if the alarm signal corresponds to a control channel fault; and
a second processing submodule, adapted to stop using the faulty data channel and continue using the normal condition data channels if the alarm signal corresponds to a data channel fault.

15. The apparatus of claim 14, wherein:
if the fault model covers node faults unrelated to passthrough, the protection switching module (30) further comprises: a third processing submodule, adapted to execute the passthrough action when the alarm signal corresponds to a node fault unrelated to passthrough;
if the fault model covers node faults and/or link faults related to passthrough, the first processing submodule is further adapted to execute the steering mode with offset time adjustment when the alarm signal corresponds to the node faults and/or link faults related to passthrough.

16. The apparatus of claim 15, wherein the third processing submodule comprises:
a diverting unit, adapted to make the control card of the faulty node divert the upstream control packet directly; and a passthrough setting unit, adapted to set all channels of OADM of the faulty node to the passthrough mode.

17. The apparatus according to any of claim 14 to claim 16, wherein the first processing submodule comprises:
a broadcasting unit, adapted to cause a second node that detects the fault to broadcast the fault notification;
an offset time setting unit, adapted to cause a first node, which detects and/or receives the fault notification locally, to divert a service that comes from the first node and passes through the second node to the ring directed to a destination node, and to adjust the offset time; and
a discarding unit, adapted to discard a service that passes through the first node and needs protection.

18. The apparatus according to any one of claim 14 to claim 16, wherein the second processing submodule comprises:
a first stopping unit, adapted to make the first node stop use of the faulty data channel if the fault is located on an output port of the first node of the fault; and make the first node send a fault notification to the adjacent upstream node through a control channel of the reverse ring if the first node does not support wavelength conversion;
a second stopping unit, adapted to make the first node send a fault notification through a control channel of the reverse ring if the fault is located on an input port of the first node;
a third stopping unit, adapted to cause the adjacent upstream node, which receives the fault notification of data channel, to disable the corresponding data channel; and
a fourth stopping unit, adapted to make the adjacent upstream node divert the fault notification if the adjacent upstream node does not support wavelength conversion; or make the adjacent upstream node absorb the fault notification if the upstream node supports wavelength conversion.

19. The apparatus according to any of claim 14 to claim 16, wherein the signal creating module (20) comprises a link monitoring submodule, adapted to determine the fault type through fault detecting and locating; and the fault detecting is performed in the mode of separating the data channel from the control channel.

## Patentansprüche

1. Verfahren zum Umgang mit einem Fehler eines Resilient Optical Burst Ring ROBR, mit den folgenden Schritten:
Anwenden eines Steering-Modus, wenn ein Steuerkanal ausfällt; und
Anwenden eines Modus des Stoppens der Verwendung des fehlerhaften Datenkanals und des Weiterverwendens von Normalzustand-Datenkanälen, wenn ein Datenkanal ausfällt.

2. Verfahren nach Anspruch 1, ferner mit dem folgenden Schritt: Einrichten (S102) eines Fehlermodells im Hinblick auf die ROBR-Eigenschaften, wobei das Fehlermodell mindestens Steuerkanalfehler und Datenkanalfehler abdeckt.

3. Verfahren nach Anspruch 2, ferner mit dem folgenden Schritt: Senden (S 104) eines entsprechenden Fehleralarmsignals zu einer Schicht einer Media Access Control MAC, wenn mindestens ein durch das Fehlermodell abgedeckter Fehler auftritt.

4. Verfahren nach einem der Ansprüche 1 bis 3, wobei Fehlertypen von Steuerkanälen Steuersignalausfall und Steuersignalverschlechterung umfassen und der Steering-Modus, wenn ein Steuerkanal ausfällt, Folgendes umfasst:
Umleiten eines Dienstes, wenn der Fehlertyp eines Steuerkanals auf einem Ring Steuersignalausfall ist;
Umleiten eines Dienstes, wenn der Fehlertyp eines Steuerkanals auf einem Ring Steuersignalverschlechterung ist und der Rückwärtsring normal ist; und Unveränderthalten einer aktuellen Verarbeitungsringrichtung, wenn der Fehlertyp eines Steuerkanals auf einem Ring Steuersignalverschlechterung ist und der Fehlertyp auf dem Rückwärtsring Steuersignalausfall ist.

5. Verfahren nach einem der Ansprüche 1 bis 3, wobei der Modus des Stoppens der Verwendung des fehlerhaften Datenkanals Folgendes umfasst:
Stoppen der Verwendung des fehlerhaften Datenkanals durch einen ersten Knoten, wenn sich der Fehler des fehlerhaften Datenkanals auf einem Ausgangsport des ersten Knotens des Fehlers befindet; und Senden einer Fehlerbenachrichtigung zu einem angrenzenden Upstream-Knoten durch einen Steuerkanal des Rückwärtsrings, wenn der erste Knoten Wellenlängenumsetzung nicht unterstützt;
Senden einer Fehlerbenachrichtigung durch einen Steuerkanal des Rückwärtsrings, wenn sich der Datenkanalfehler auf dem Eingangsport des ersten Knotens befindet; und
Setzen des fehlerhaften Datenkanals als gesperrt durch den angrenzenden Upstream-Knoten, der die Fehlerbenachrichtigung des Datenkanals empfängt, Umleiten der Fehlerbenachrichtigung, wenn der angrenzende Upstream-Knoten Wellenlängenumsetzung nicht unterstützt; und Absorbieren der Fehlerbenachrichtigung, wenn der angrenzende Upstream-Knoten Wellenlängenumsetzung unterstützt.

6. Verfahren nach einem der Ansprüche 1 bis 5, ferner mit den folgenden Schritten:
Durchführen des Steering-Modus mit Offsetzeitjustierung im Fall eines Streckenfehlers oder eines Fehlers in Bezug auf Durchleitung; und/oder
Anwenden eines Durchleitungsmodus im Fall eines Knotenfehlers, der nicht mit Signalumleitung zusammenhängt.

7. Verfahren nach Anspruch 6, wobei der Durchleitungsmodus Folgendes umfasst:
Bewirken, dass eine Steuerkarte des fehlerhaften Knotens das Upstream-Steuerpaket direkt umleitet; und
Setzen aller Kanäle des Optical Add/Drop Multiplexer OADM als Durchleitung.

8. Verfahren zum Umgang mit Fehlern nach einem der Ansprüche 1 bis 5, wobei mit dem Steering-Modus Offsetzeitjustierung einhergeht.

9. Verfahren zum Umgang mit Fehlern nach Anspruch 8, wobei der Steering-Modus mit Offsetzeitjustierung Folgendes umfasst:
Rundsenden der Fehlerbenachrichtigung durch einen zweiten Knoten, der den Fehler detektiert; und
Umleiten des Dienstes, der von dem ersten Knoten kommt und den zweiten Knoten durchläuft, durch den ersten Knoten, der die Fehlerbenachrichtigung lokal detektiert und/oder empfängt, zu dem zu dem Zielknoten gerichteten Ring und Justieren der Offsetzeit und Verwerfen des Dienstes unter Schutz, der durch den ersten Knoten läuft.

10. Verfahren nach einem der Ansprüche 1 bis 9, wobei der Fehlertyp durch Fehlerdetektion und -lokalisierung bestimmt wird; und die Fehlerdetektion in dem Modus des Trennens des Datenkanals von dem Steuerkanal durchgeführt wird.

11. Vorrichtung zum Umgang mit dem Failover eines Resilient Optical Burst Ring ROBR, umfassend:
ein Schutzschaltmodul (30), das dafür ausgelegt ist, einen Steering-Modus auszuführen, wenn ein Steuerkanal ausfällt; und einen Modus des Stoppens der Verwendung des fehlerhaften Datenkanals und des Weiterverwendens von Normalzustand-Datenkanälen auszuführen, wenn ein Datenkanal ausfällt.

12. Vorrichtung nach Anspruch 11, ferner umfassend:
ein Modellierungsmodul (10), das dafür ausgelegt ist, ein Fehlermodell im Hinblick auf die ROBR-Eigenschaften einzurichten, wobei das Fehlermodell mindestens Steuerkanalfehler und Datenkanalfehler abdeckt.

13. Vorrichtung nach Anspruch 12, ferner umfassend:
ein Signalerzeugungsmodul (20), das dafür ausgelegt ist, ein ordnungsgemäßes Fehleralarmsignal zu der MAC-Schicht zu senden, wenn mindestens ein durch das Fehlermodell abgedeckter Fehler auftritt.

14. Vorrichtung nach einem der Ansprüche 13, wobei das Schutzschaltmodul (30) Folgendes umfasst:
ein erstes Verarbeitungs-Submodul, das dafür ausgelegt ist, den Steering-Modus mit Offsetzeitjustierung auszuführen, wenn das Alarmsignal einem Steuerkanalfehler entspricht; und
ein zweites Verarbeitungs-Submodul, das dafür ausgelegt ist, das Verwenden des fehlerhaften Datenkanals zu stoppen und die Normalzustand-Datenkanäle weiter zu verwenden, wenn das Alarmsignal einem Datenkanalfehler entspricht.

15. Vorrichtung nach Anspruch 14, wobei,
wenn das Fehlermodell nicht mit Durchleitung zusammenhängende Knotenfehler abdeckt, das Schutzschaltmodul (30) ferner Folgendes umfasst: ein drittes Verarbeitungs-Submodul, das dafür ausgelegt ist, die Durchleitungsaktion auszuführen, wenn das Alarmsignal einem nicht mit Durchleitung zusammenhängenden Knotenfehler entspricht;
wenn das Fehlermodell mit Durchleitung zusammenhängende Knotenfehler und/oder Streckenfehler abdeckt, das erste Verarbeitungs-Submodul ferner dafür ausgelegt ist, den Steering-Modus mit Offsetzeitjustierung auszuführen, wenn das Alarmsignal den mit Durchleitung zusammenhängenden Knotenfehlern und/oder Streckenfehlern entspricht.

16. Vorrichtung nach Anspruch 15, wobei das dritte Verarbeitungs-Submodul Folgendes umfasst:
eine Umleiteinheit, die dafür ausgelegt ist, zu bewirken, dass die Steuerkarte des fehlerhaften Knotens das Upstream-Steuerpaket direkt umleitet; und eine Durchleitungs-Setzeinheit, die dafür ausgelegt ist, alle Kanäle eines OADM des fehlerhaften Knotens auf den Durchleitungsmodus zu setzen.

17. Vorrichtung nach einem der Ansprüche 14 bis 16, wobei das erste Verarbeitungs-Submodul Folgendes umfasst:
eine Rundsendeeinheit, die dafür ausgelegt ist, zu bewirken, dass ein zweiter Knoten, der den Fehler detektiert, die Fehlerbenachrichtigung rundsendet;
eine Offsetzeit-Setzeinheit, die dafür ausgelegt ist, zu bewirken, dass ein erster Knoten, der die Fehlerbenachrichtigung lokal detektiert und/oder empfängt, einen Dienst, der von dem ersten Knoten kommt und den zweiten Knoten durchläuft, zu dem zu einem Zielknoten gerichteten Ring umleitet und die Offsetzeit justiert; und
eine Verwerfungseinheit, die dafür ausgelegt ist, einen Dienst, der den ersten Knoten durchläuft und Schutz benötigt, zu verwerfen.

18. Vorrichtung nach einem der Ansprüche 14 bis 16, wobei das zweite Verarbeitungs-Submodul Folgendes umfasst:
eine erste Stoppeinheit, die dafür ausgelegt ist, zu bewirken, dass der erste Knoten die Verwendung des fehlerhaften Datenkanals stoppt, wenn sich der Fehler auf einem Ausgangsport des ersten Knotens des Fehlers befindet; und zu bewirken, dass der erste Knoten eine Fehlerbenachrichtigung durch einen Steuerkanal des Rückwärtsrings zu dem angrenzenden Upstream-Knoten sendet, wenn der erste Knoten Wellenlängenumsetzung nicht unterstützt;
eine zweite Stoppeinheit, die dafür ausgelegt ist, zu bewirken, dass der erste Knoten eine Fehlerbenachrichtigung durch einen Steuerkanal des Rückwärtsrings sendet, wenn sich der Fehler auf einem Eingangsport des ersten Knotens befindet;
eine dritte Stoppeinheit, die dafür ausgelegt ist, zu bewirken, dass der angrenzende Upstream-Knoten, der die Fehlerbenachrichtigung des Datenkanals empfängt, den entsprechenden Datenkanal sperrt; und
eine vierte Stoppeinheit, die dafür ausgelegt ist, zu bewirken, dass der angrenzende Upstream-Knoten die Fehlerbenachrichtigung umleitet, wenn der angrenzende Upstream-Knoten Wellenlängenumsetzung nicht unterstützt; oder zu bewirken, dass der angrenzende Upstream-Knoten die Fehlerbenachrichtigung absorbiert, wenn der Upstream-Knoten Wellenlängenumsetzung unterstützt.

19. Vorrichtung nach einem der Ansprüche 14 bis 16, wobei das Signalerzeugungsmodul (20) ein Streckenüberwachungs-Submodul umfasst, das dafür ausgelegt ist, den Fehlertyp durch Fehlerdetektion und -lokalisierung zu bestimmen; und die Fehlerdetektion in dem Modus des Trennens des Datenkanals von dem Steuerkanal durchgeführt wird.

## Revendications

1. Procédé de prise en charge d'une défaillance d'Anneau Optique Résilient en mode Rafale, ROBR, comprenant :
l'application d'un mode d'orientation quand un canal de commande tombe en panne ; et
l'application d'un mode d'arrêt d'utilisation du canal de données défaillant et de continuation de l'utilisation de canaux de données normaux quand un canal de données tombe en panne.

2. Procédé selon la revendication 1, comprenant en outre : l'établissement (S102) d'un modèle de défaillances en fonction des caractéristiques ROBR, le modèle de défaillances couvrant au moins des défaillances de canal de commande et des défaillances de canal de données.

3. Procédé selon la revendication 2, comprenant en outre : l'envoi (S 104) d'un signal d'alarme de défaillance correspondant à une couche de Commande d'Accès au Support, MAC, quand au moins une défaillance couverte par le modèle de défaillances se produit.

4. Procédé selon l'une quelconque des revendications 1 à 3, dans lequel les types de défaillances des canaux de commande comprennent une défaillance de signal de commande et une dégradation de signal de commande, et le mode d'orientation quand un canal de commande tombe en panne comprend :
la déviation d'un service si le type de défaillance d'un canal de commande sur un anneau est une défaillance de signal de commande :
la déviation d'un service si le type de défaillance d'un canal de commande sur un anneau est une dégradation de signal de commande et l'anneau inverse est normal ; et le maintien d'un sens actuel d'anneau de traitement si le type de défaillance d'un canal de commande sur un anneau est une dégradation de signal de commande et le type de défaillance sur l'anneau inverse est une défaillance de signal de commande.

5. Procédé selon l'une quelconque des revendications 1 à 3, dans lequel le mode d'arrêt d'utilisation du canal de données défaillant comprend :
l'arrêt, par un premier noeud, de l'utilisation du canal de données défaillant si la défaillance de canal de données défaillant se situe au niveau d'un port de sortie du premier noeud de la défaillance ; et l'envoi d'un avis de défaillance à un noeud amont adjacent par le biais d'un canal de commande de l'anneau inverse si le premier noeud ne supporte pas la conversion de longueur d'onde ;
l'envoi d'un avis de défaillance par le biais d'un canal de commande de l'anneau inverse si la défaillance de canal de données se situe au niveau du port d'entrée du premier noeud ; et
l'établissement, par le noeud amont adjacent qui reçoit l'avis de défaillance du canal de données, du canal de données défaillant comme étant désactivé ; la déviation de l'avis de défaillance si le noeud amont adjacent ne supporte pas la conversion de longueur d'onde ; et l'absorption de l'avis de défaillance si le noeud amont adjacent supporte la conversion de longueur d'onde.

6. Procédé selon l'une quelconque des revendications 1 à 5, comprenant en outre : l'exécution du mode d'orientation avec un réglage de temps de décalage dans le cas d'une défaillance de liaison ou d'une défaillance relative à un passage direct : et/ou l'application d'un mode de passage direct dans le cas d'une défaillance de noeud non liée à une déviation de signal.

7. Procédé selon la revendication 6, dans lequel le mode de passage direct comprend : l'incitation d'une carte de commande du noeud défaillant à dévier directement le paquet de commande amont ; et
l'établissement de tous les canaux d'un Multiplexeur Optique à Insertion/Extraction, OADM, en passage direct.

8. Procédé de prise en charge de défaillances selon l'une quelconque des revendications 1 à 5, dans lequel un réglage de temps de décalage est associé au mode d'orientation.

9. Procédé de prise en charge de défaillances selon la revendication 8, dans lequel le mode d'orientation avec réglage de temps de décalage comprend :
la diffusion, par un second noeud qui détecte la défaillance, de l'avis de défaillance ; et
la déviation, par le premier noeud qui détecte et/ou reçoit l'avis de défaillance localement, du service qui provient du premier noeud et qui passe par le second noeud vers l'anneau dirigé vers le noeud de destination, et le réglage du temps de décalage, et le rejet du service protégé qui passe par le premier noeud.

10. Procédé selon l'une quelconque des revendications 1 à 9, dans lequel le type de défaillance est déterminé par détection et localisation de défaillances ; et la détection de défaillances est exécutée dans le mode de séparation du canal de données du canal de commande.

11. Appareil de prise en charge de défaillance d'Anneau Optique Résilient en mode Rafale, ROBR, comprenant :
un module de commutation de protection (30), adapté pour exécuter un mode d'orientation quand un canal de commande tombe en panne, et exécuter un mode d'arrêt d'utilisation du canal de données défaillant et de continuation de l'utilisation de canaux de données normaux quand un canal de données tombe en panne.

12. Appareil selon la revendication 11, comprenant en outre :
un module de modélisation (10), adapté pour établir un modèle de défaillances en fonction des caractéristiques ROBR, le modèle de défaillances couvrant au moins des défaillances de canal de commande et des défaillances de canal de données.

13. Appareil selon la revendication 12, comprenant en outre :
un module de création de signal (20), adapté pour envoyer un signal d'alarme de défaillance approprié à la couche MAC, quand au moins une défaillance couverte par le modèle de défaillances se produit.

14. Appareil selon la revendication 13, dans lequel le module de commutation de protection (30) comprend :
un premier sous-module de traitement, adapté pour exécuter le mode d'orientation avec un réglage de temps de décalage si le signal d'alarme correspond à une défaillance de canal de commande ; et
un deuxième sous-module de traitement, adapté pour arrêter l'utilisation du canal de données défaillant et continuer l'utilisation des canaux de données normaux si le signal d'alarme correspond à une défaillance de canal de données.

15. Appareil selon la revendication 14, dans lequel :
si le modèle de défaillances couvre des défaillances de noeud non liées à un passage direct, le module de commutation de protection (30) comprend en outre : un troisième sous-module de traitement, adapté pour exécuter l'action de passage direct quand le signal d'alarme correspond à une défaillance de noeud non liée au passage direct ;
si le modèle de défaillances couvre des défaillances de noeud et/ou des défaillances de liaison liées au passage direct, le premier sous-module de traitement est adapté en outre pour exécuter le mode d'orientation avec un réglage de temps de décalage quand le signal d'alarme correspond aux défaillances de noeud et/ou défaillances de liaison liées au passage direct.

16. Appareil selon la revendication 15, dans lequel le troisième sous-module de traitement comprend :
une unité de déviation, adaptée pour amener la carte de commande du noeud défaillant à dévier directement le paquet de commande amont ; et une unité d'établissement de passage direct, adaptée pour établir tous les canaux de l'OADM du noeud défaillant sur le mode de passage direct.

17. Appareil selon l'une quelconque des revendications 14 à 16, dans lequel le premier sous-module de traitement comprend :
une unité de diffusion, adaptée pour amener un second noeud qui détecte la panne à diffuser l'avis de défaillance ;
une unité de réglage de temps de décalage, adaptée pour amener un premier noeud, qui détecte et/ou reçoit l'avis de défaillance localement, à dévier un service qui provient du premier noeud et qui passe par le second noeud vers l'anneau dirigé vers un noeud de destination, et régler le temps de décalage ; et
une unité de rejet, adaptée pour rejeter un service qui passe par le premier noeud et qui doit être protégé.

18. Appareil selon l'une quelconque des revendications 14 à 16, dans lequel le deuxième sous-module de traitement comprend :
une première unité d'arrêt, adaptée pour amener le premier noeud à arrêter l'utilisation du canal de données défaillant si la défaillance se situe au niveau d'un port de sortie du premier noeud de la défaillance ; et amener le premier noeud à envoyer un avis de défaillance au noeud amont adjacent par le biais d'un canal de commande de l'anneau inverse si le premier noeud ne supporte pas la conversion de longueur d'onde ;
une deuxième unité d'arrêt, adaptée pour amener le premier noeud à envoyer un avis de défaillance par le biais d'un canal de commande de l'anneau inverse si la défaillance de canal de données se situe au niveau du port d'entrée du premier noeud ; et
une troisième unité d'arrêt, adaptée pour amener le noeud amont adjacent, qui reçoit l'avis de défaillance du canal de données, à désactiver le canal de données correspondant ; et
une quatrième unité d'arrêt, adaptée pour amener le noeud amont adjacent à dévier l'avis de défaillance si le noeud amont adjacent ne supporte pas la conversion de longueur d'onde ; ou amener le noeud amont adjacent à absorber l'avis de défaillance si le noeud amont adjacent supporte la conversion de longueur d'onde.

19. Appareil selon l'une quelconque des revendications 14 à 16, dans lequel le module de création de signal (20) comprend un sous-module de surveillance de liaison, adapté pour déterminer le type de défaillance par détection et localisation de défaillance ; et la détection de défaillance est exécutée dans le mode de séparation du canal de données du canal de commande.
